# EUROPÄISCHE PATENTANMELDUNG

(11) **EP 2 395 604 A2**
(43) Veröffentlichungstag der Anmeldung: **14.12.2011**
(21) Anmeldenummer: 11004249.6
(22) Anmeldetag: 24.05.2011
(51) Int. Cl.: H01R 4/24, H01R 13/502

(54) **Kabelverbindungseinrichtung**

(30) Priorität: 08.06.2010 DE 102010022970
(71) Anmelder: Green Inno GmbH, 72770 Reutlingen (DE)
(72) Erfinder: Sulzer, Alexander, 88527 Unlingen (DE)
(74) Vertreter: Kohler Schmid Möbus

(57) **Zusammenfassung**

Die Erfindung betrifft eine Kabelverbindungseinrichtung (10) mit einem Gehäuse (42) und einem elektrisch leitenden Überbrückungselement (14), wobei durch das Gehäuse (42) eine erste elektrische Leitung (16), die einen innenliegenden stromführenden Kern (18) und eine isolierende Umhüllung (20) aufweist, über das Überbrückungselement (14) durch die Kabelverbindungseinrichtung (10) hindurchführbar ist, indem die Leitung (16) in mindestens eine erste Ausnehmung (22, 24) des Überbrückungselements (14) einlegbar ist, wobei die Größe der ersten Ausnehmung (22, 24) dem Durchmesser des stromführenden Kerns (18) der elektrischen Leitung (16) entspricht oder geringfügig kleiner ist und dass das Überbrückungselement (14) mindestens eine zweite Ausnehmung (26, 28) für mindestens eine zweite elektrische Leitung (30), die einen innenliegenden stromführenden Kern (32) und eine isolierende Umhüllung (34) umfasst, aufweist, wobei die Größe der zweiten Ausnehmung (26, 28) dem Querschnitt des stromführenden Kerns (32) der zweiten elektrischen Leitung (30) angepasst ist oder geringfügig kleiner ist. Durch die erfindungsgemäße Kabelverbindungseinrichtung (10) können elektrische Verbindungen zwischen mindestens zwei Leitungen (16, 30) in einfacher Art und Weise, schnell und mit hoher Qualität hergestellt werden. Die elektrische Verbindung ist insbesondere beim Ausfüllen des Gehäuseinneren (58) mit einem isolierenden Füllmaterial elektrisch isoliert und gegenüber Witterungseinflüssen, wie Feuchtigkeit, von außen geschützt.

## Beschreibung

Die Erfindung betrifft eine Kabelverbindungseinrichtung mit der ein elektrisch leitfähiger Kontakt zwischen zwei stromführenden Leitungen herstellbar ist. Derartige Kabelverbindungseinrichtungen werden in unterschiedlichsten Bereichen der Elektrotechnik eingesetzt. Seit einigen Jahren wird die Kabelverbindungstechnik insbesondere im Bereich der Photovoltaik angewandt, wo z. B. Reihen von einzelnen Solarzellenpanelen miteinander seriell verbunden und anschließend einer Hauptleitung zugeführt werden.

Dabei kommen je nach Ausgestaltung der Solaranlage unterschiedlichste Verbindungen in Betracht. Häufig werden so genannte T-Verbindungen eingesetzt, z. B. dann, wenn ein Strang von Solarzellenpanelen, wie oben beschrieben, der Hauptleitung zugeführt wird, aber auch Kreuzverbindungen (X-Verbindungen) sind häufig verwendete Verbindungstypen.

Beim Einsatz von elektrischen Kabelverbindungen in der Photovoltaik ist insbesondere die T-Verbindung, die der Stromeinspeisestelle der Solaranlage am nächsten liegt, durch den im Vergleich zur restlichen Anlage erhöhten Stromdurchfluss besonders hoch belastet. Zudem herrschen auf Photovoltaikanlagen in der Regel äußerst schwierige Umgebungsbedingungen für alle zur Anlage gehörenden Einrichtungen. Die Temperaturen schwanken ohne Weiteres von z. B. - 5 °C bis + 40 °C, die Sonneneinstrahlung ist überdurchschnittlich hoch und Feuchtigkeit bzw. Frost setzen der Anlage und ihren Komponenten, wie z. B. den Leitungen und Verbindungen, besonders zu. Herkömmliche Verbindungen, insbesondere die Verbindungen zwischen einzelnen Solarzellenpanelen, werden häufig "gecrimpt" oder durch ein Stecksystem verbunden. Unter Crimpen versteht man ein Fügeverfahren, bei dem zwei Komponenten durch plastische Verformung miteinander verbunden werden. Eine Crimpverbindung ist nur bedingt lösbar und meistens nicht reparabel. Das Crimpen stellt eine Alternative zu herkömmlichen Verbindungen wie dem Löten oder dem Schweißen dar, wobei die Steckverbinderelemente meist über Crimpverbindungen realisiert werden.

Löt- , Schweißverbindungen oder Steckverbinder kommen in der Regel an Verbindungsstellen, die höher belastet sind, zum Einsatz, also z. B. bei Verbindungsstellen wie der oben genannten T-Verbindung, die der Stromeinspeisestelle am nächsten liegt. Beim Löten, das wie auch das Schweißen ein thermisches Verfahren zum stoffschlüssigen Fügen von Werkstoffen ist, werden die elektrischen Leiter durch Schmelzen eines Lotes (Schmelzlöten) miteinander verbunden.

Sowohl das Crimpen als auch das Löten und Schweißen sind jedoch für den Einsatz bei Photovoltaikanlagen nicht immer geeignet. Denn Photovoltaikanlagen sind in der Regel auf eine Lebensdauer von 30 Jahren ausgelegt, was häufig der Grund für ein vorzeitiges Versagen der vorgenannten elektrischen Verbindungen ist.

Darüber hinaus ist dem Löten und Schweißen gemeinsam, dass zum Realisieren einer Löt- bzw. Schweißverbindung, eine Reihe von Gerätschaften, wie Lötkolben, Lötzinn, Halteeinrichtungen, oder eventuell Gasflaschen, Brenner etc. mitgeführt werden müssen. Dies ist insbesondere auf Dächern, auf denen Solaranlagen typischerweise installiert werden, hinderlich bzw. zum Teil gefährlich. Gelötete oder geschweißte Verbindungen müssen darüber hinaus nach dem Fügen isoliert werden, was z. B. durch Schrumpfschläuche und Anwendung von Wärme erfolgt.

Der Einsatz dieser Verfahren ist somit hinsichtlich der benötigten Zeit und der erforderlichen Logistik grundsätzlich vergleichsweise aufwändig. Dies ist weder bei einer Neuinstallation einer Photovoltaikanlage noch beim Reparieren von umgebungs- und/oder altersbedingt ausgefallenen elektrischen Verbindungen wünschenswert.

### Aufgabe der Erfindung

Es ist daher die Aufgabe der vorliegenden Erfindung, eine Kabelverbindungseinrichtung bereitzustellen, mit der ein schnelles, sicheres, insbesondere redundantes, dauerhaftes und einfaches elektrisches Verbinden von Leitungen möglich ist.

### Kurze Beschreibung der Erfindung

Die Aufgabe wird gelöst durch eine Kabelverbindungseinrichtung mit einem Gehäuse und einem elektrisch leitenden Überbrückungselement, wobei durch das Gehäuse eine erste elektrische Leitung, die einen innenliegenden stromführenden Kern und eine isolierende Umhüllung aufweist, über das Überbrückungselement durch die Kabelverbindungseinrichtung hindurchführbar ist, indem die Leitung in mindestens eine erste Ausnehmung des Überbrückungselements einlegbar ist, wobei die Größe der ersten Ausnehmung dem Durchmesser des stromführenden Kerns der elektrischen Leitung entspricht oder geringfügig kleiner ist und dass das Überbrückungselement mindestens eine zweite Ausnehmung für mindestens eine zweite elektrische Leitung, die einen innenliegenden stromführenden Kern und eine isolierende Umhüllung umfasst, aufweist, wobei die Größe der zweiten Ausnehmung dem Querschnitt des stromführenden Kerns der zweiten elektrischen Leitung angepasst ist oder geringfügig kleiner ist.

Durch die erfindungsgemäße Kabelverbindungseinrichtung können elektrische Verbindungen zwischen mindestens zwei Leitungen in einfacher Art und Weise hergestellt werden. Hierzu ist zunächst lediglich die erste Leitung in die erste Ausnehmung des Überbrückungselements einzubringen, insbesondere hineinzudrücken, sodass die isolierende Umhüllung der ersten Leitung durch den Randbereich der ersten Ausnehmung aufgeschnitten wird und das Überbrückungselement mit dem stromführenden Kern des ersten Leiters in direkten Kontakt tritt. Hierzu ist ein Bereich der ersten Ausnehmung, der den stromführenden Kern der elektrischen Leitung aufnimmt, derart ausgebildet, dass er gleich groß wie der Durchmesser des stromführenden Kerns der elektrischen Leitung oder geringfügig kleiner ist. Insbesondere wenn der Durchmesser geringfügig kleiner ist, erfolgt somit eine Pressung des stromführenden Kerns, sodass der Kontakt besonders sicher hergestellt ist.

Im Anschluss ist die zweite Leitung in die zweite Ausnehmung des Überbrückungselements einzubringen, insbesondere einzupressen, sodass die isolierende Umhüllung der zweiten Leitung durch den Randbereich der zweiten Ausnehmung aufgeschnitten bzw. aufgeritzt wird und das Überbrückungselement mit dem stromführenden Kern des zweiten Leiters (und damit indirekt auch mit dem stromführenden Kern des ersten Leiters) in elektrischen Kontakt tritt. Hinsichtlich der Größe der zweiten Ausnehmung und dem Durchmesser des stromführenden Kerns der zweiten Leitung gilt das der ersten Leitung entsprechende. Es ist möglich, dass die Durchmesser der ersten und/oder zweiten Leitungen, insbesondere die Durchmesser der jeweiligen stromführenden Kerne, unterschiedlich groß sind. Ferner ist es möglich, dass die erfindungsgemäße Kabelverbindungseinrichtung nicht nur zwei Leitungen verbindet sondern drei, vier, oder mehr Leitungen, wobei diese Leitungen auch grundsätzlich verschieden große Durchmesser sowohl der isolierenden Umhüllung als auch des stromführenden Kerns aufweisen können.

Durch das Gehäuse, ist die erfindungsgemäße Kabelverbindungseinrichtung elektrisch isoliert und gegenüber Witterungseinflüssen von außen geschützt. Im Vergleich zu herkömmlichen Verbindungstechniken wie z. B. dem Crimpen, Schweißen oder Löten ist bei der erfindungsgemäßen Kabelverbindungseinrichtung kein separates Schneidwerkzeug erforderlich, um an den stromführenden Kern der jeweiligen Leitungen zu gelangen. Der

Schneidvorgang erfolgt alleine durch das Einpressen der Leitungen in das Überbrückungselement. Dies ist sehr leicht und schnell zu bewerkstelligen und erfordert keine besonderen Sicherheitsvorkehrungen. Die Anpassung der Verbindung kann immer Vorort erfolgen. Es versteht sich, dass die Kabelverbindungseinrichtung als Stromverteiler einsetzbar ist.

### Bevorzugte Ausführungsformen der Erfindung

Bevorzugt ist eine Kabelverbindungseinrichtung, bei der die Ausnehmungen zur Aufnahme des stromführenden Kerns der Leitungen einen im Wesentlichen halbkreisförmigen Grund aufweisen. Damit sind die Ausnehmungen in der Regel zumindest einseitig bzw. zur Hälfte der Kreisform des Leitungsquerschnitts, insbesondere des Querschnitts des stromführenden Kerns, angepasst. Es stellt sich somit insbesondere bei den Ausnehmungen, die geringfügig kleiner als die Durchmesser der stromführenden Kerne sind, eine allseitig gleichmäßige Pressung bei der Kontaktherstellung zum Überbrückungselement ein. Die allseitige Pressung verbessert den Kontakt zwischen dem Kern des Leiters und dem Überbrückungselement und erhöht damit die Sicherheit und Lebensdauer der Verbindung.

Besonders bevorzugt ist ferner eine Weiterbildung der vorhergehenden Ausführungsform, bei der die Ausnehmungen von Ausnehmungsöffnungen zum Grund der Ausnehmungen hin einen kontinuierlich enger werdenden Einführ- bzw. Aufschneidschlitz aufweisen. Durch den Einführ- bzw. Aufschneidschlitz wird beim Eindrücken bzw. Einpressen einer Leitung in eine Ausnehmung die isolierende Umhüllung der Leitung aufgeschnitten bzw. angeritzt. Durch die zunehmend enger werdende Form des Schlitzes kann die Leitung auch mit lediglich geringem Kraftaufwand zur Herstellung des Kontakts mit dem Überbrückungselement in die Aufnehmung eingebracht werden. Kunststoffe, aus denen die isolierende Umhüllung der Leitungen typischerweise aufgebaut sind, sind somit ohne Weiteres durchtrennbar. Typischerweise ist der Einführ- bzw. Aufschneidschlitz kurz vor Erreichen des Grundes der Ausnehmung geringfügig enger ausgebildet als ein kreisförmiger oder halbkreisförmiger Grund der Ausnehmung. Dadurch "rastet" der stromführende Kern der Leitung gewissermaßen in den Ausnehmungsgrund ein, und dies nachdem er vom Einführ- bzw. Aufschneidschlitz freigelegt worden ist. Dies erhöht den Halt der Leitung in dem Überbrückungselement und somit in der gesamten Kabelverbindungseinrichtung.

Bevorzugt ist auch eine Ausführungsform der Kabelverbindungseinrichtung, die dadurch gekennzeichnet ist, dass das Überbrückungselement zum Aufschneiden der isolierenden Umhüllung im Randbereich der Ausnehmungen scharfkantig ausgebildet ist. Mit Randbereich der Ausnehmungen wird im Sinne dieser Ausführungsform insbesondere der Bereich des Einführ- und Aufschneidschlitzes verstanden. Ein scharfkantiger Randbereich erleichtert zusätzlich das Anritzen und das zunehmende Zertrennen der isolierenden Umhüllung beim Einbringen einer Leitung in die Kabelverbindungseinrichtung.

Ferner ist ebenfalls eine Ausführungsform bevorzugt, bei der das Überbrückungselement für jede elektrische Leitung eine vordere und eine hintere Ausnehmung aufweist. Dadurch ist eine redundante Kontaktierung einer Leitung mit dem Überbrückungselement möglich, die die Kontaktsicherheit stark erhöht.

Besonders bevorzugt ist ferner eine Weiterbildung der vorhergehenden Ausführungsform, bei der das Überbrückungselement rahmenförmig ausgebildet ist, wobei an einer vorderen Rahmenseite des Überbrückungselements vordere Ausnehmungen und an einer hinteren Rahmenseite des Überbrückungselements hintere Ausnehmungen vorgesehen sind. Durch eine rahmenförmige Konstruktion des Überbrückungselementes erhält in erster Linie das Überbrückungselement aber darüber hinaus auch das mit dem Überbrückungselement verbundene Gehäuse eine erhöhte Stabilität und Robustheit. Ferner ist eine derartig ausgebildete Kabelverbindungseinrichtung besser greifbar und somit leichter handhabbar.

Bei einer anderen bevorzugten Ausführungsform weist das Gehäuse zwei Gehäusehälften auf, die miteinander verrastbar sind. Somit kann das Gehäuse nach dem Einbringen der Leitungen in das Überbrückungselement in einfacher Art und Weise verschlossen werden, wodurch das Gehäuseinnere vom äußeren Einflüssen wie Feuchtigkeit, Sonneneinstrahlung etc. geschützt ist und vor allem isolierend wirkt. Die Gehäusehälften sind insbesondere miteinander verklipsbar.

Besonders bevorzugt ist darüber hinaus eine Weiterbildung der vorhergehenden Ausführungsform, bei der die Gehäusehälften irreversibel miteinander verrastbar sind. Dann kann eine Veränderung der Verbindung nur durch das Zerstören der Kabelverbindungseinrichtung, insbesondere durch Zerstören des Gehäuses erfolgen. Dies zeigt einem Anwender bzw. Nutzer an, dass die Kabelverbindungseinrichtung bereits vorher manipuliert worden ist. Die irreversible Verrastung stellt quasi eine Originalitätssicherung der Kabelverbindungseinrichtung dar.

Bei einer anderen bevorzugten Weiterbildung ist für jede Gehäusehälfte ein Überbrückungselement vorgesehen, wobei im miteinander verrasteten Zustand der Gehäusehälften die Leitungen durch die Überbrückungselemente rundum verpressbar sind. Bei einer derartig ausgestalteten Kabelverbindungseinrichtung werden die stromführenden Kerne der Leitungen vollumfänglich von den Ausnehmungen der Überbrückungselemente umschlossen. Dadurch und durch die Verpressung des stromführenden Kerns der Leitung ist der elektrische Kontakt zwischen den Leitungen und den Überbrückungselementen besonders stark und sicher ausgeprägt. Die beiden Überbrückungselemente berühren sich zumindest indirekt über die mit jeweils beiden in Kontakt stehenden Leitungen. In der Regel berühren sich die beiden Überbrückungselemente jedoch ferner an weiteren Kontaktstellen innerhalb des Gehäuses.

Bevorzugt ist ebenfalls eine Weiterbildung die dadurch gekennzeichnet ist, dass die Überbrückungselemente ein Rastelement und eine Verrastungsaufnahme aufweisen. Dadurch können die beiden Überbrückungselemente unabhängig von einer möglichen gegenseitigen Verrastung über die stromführenden Kerne der Leitungen auch direkt miteinander verrasten und somit die Sicherheit der Kabelverbindungseinrichtung erhöhen.

Eine andere Weiterbildung ist dadurch gekennzeichnet, dass die Gehäusehälften und die Überbrückungselemente symmetrisch ausgebildet sind. Bei einer symmetrischen bzw. spiegelbildlichen Ausgestaltung der Kabelverbindungseinrichtung können in der Produktion enorme Kosten eingespart werden. Denn sowohl zur Herstellung der Gehäusehälften in beispielsweise Spritzgusstechnik als auch der Herstellung der Überbrückungselemente durch eine Stanz- und/oder Biegetechnik können dann die gleichen Form-, Stanz- oder Biegewerkzeuge verwendet werden. Darüber hinaus sind zu ersetzende Teile dann leichter und mit höherer Wahrscheinlichkeit verfügbar.

Bei einer besonders bevorzugten Ausführungsform ist an dem Gehäuse zum Einbringen eines Füllmaterials in das Gehäuseinnere mindestens eine Eintrittsöffnung und mindestens eine Austrittsöffnung ausgebildet. Somit kann das Gehäuseinnere nachdem die zu verbindenden Leitungen in die Ausnehmungen der Überbrückungselemente eingebracht worden sind und die Gehäusehälften miteinander verrastet wurden, mit einem Füllmaterial befüllt werden, sodass die Kontaktierung flüssigkeitsdicht und gasdicht verschlossen bzw. versiegelt wird. Das Einwirken äußerer Umwelteinflüsse auf das Innere der Kabelverbindungseinrichtung ist dann ausgeschlossen. Insbesondere kann keine in der Luft enthaltene Feuchtigkeit zu Korrosion an den freigelegten Stellen des stromführenden Kerns der Leitungen oder an dem elektrisch leitenden Überbrückungselement führen. Das Vorhandensein einer Austrittsöffnung ermöglicht in vorteilhafter Weise, dass die beim Einbringen des Füllmaterials zunächst im Gehäuseinneren befindliche Luft während des Einbringvorgangs zunehmend entweichen kann und dass darüber hinaus durch leichtes Austreten des Füllmaterials ersichtlich ist, dass das Gehäuseinnere vollständig mit dem Füllmaterial ausgefüllt ist.

Eine andere bevorzugte Ausführungsform ist dadurch gekennzeichnet, dass die Eintrittsöffnung zentral an dem Gehäuse angeordnet ist und dass die Austrittsöffnung in einem Außenbereich des Gehäuses angeordnet ist. Unter Außenbereich wird im Rahmend dieser Ausführungsform zum Beispiel ein vom Zentrum des Gehäuses entfernter Außenbereich wie der Außenrand des Gehäuses verstanden. Durch eine derartige Anordnung von Eintritts- und Austrittsöffnung wird eine günstige Verteilung des Füllmaterials beim Befüllen des Gehäusinneren erreicht, sodass keine Lufteinschlüsse oder dergleichen erfolgen können. Alle Hohlräume im geschlossenen Gehäuse werden durch das Füllmaterial vollkommen ausgefüllt. Das Füllmaterial dehnt sich in vorteilhafter Weise vom Zentrum her nach allen Seiten aus, bis es die Austrittsöffnung bzw. die Austrittsöffnungen erreicht.

Eine weitere, bevorzugte Ausführungsform ist dadurch gekennzeichnet, dass in das verrastete Gehäuse als Füllmaterial ein Heißklebematerial unter Druck einspritzbar ist. Das Einbringen von Heißkleber als Füllmaterial ist kostengünstig und verleiht der Verbindung zusätzlich Stabilität. Daher hat sich dieses Füllmaterial in der Praxis bereits mehrfach bewährt. Um das Füllmaterial in das Gehäuseinnere in kurzer Zeit einzubringen, ist es bevorzugt möglich, das Füllmaterial in Form von Kartuschen in das Gehäuseinnere einzuschießen. Dies ist z. B. mit einer Kartuschenpistole oder dergleichen möglich.

Schließlich ist die Verwendung einer Kabelverbindungseinrichtung nach einer der vorhergehenden Ausführungsformen beim Aufbau einer Photovoltaikanlage bevorzugt. Die leichte, sichere und schnelle Handhabung der erfindungsgemäßen Kabelverbindungseinrichtung ist beim Arbeiten auf Dächern oder anderweitig gefährlich exponierten Stellen von großem Vorteil. Weiter kann die Kabelverbindungseinrichtung auch als Kabelverteilereinrichtung genutzt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr für die Schilderung der Erfindung beispielhaften Charakter.

### Zeichnung und detaillierte Beschreibung der Erfindung

Die Erfindung ist in den Zeichnungen schematisch dargestellt und wird anhand von Ausführungsbeispielen näher erläutert.

Es zeigt:
- Fig. 1: eine perspektivische Ansicht auf eine erste Gehäusehälfte einer erfindungsgemäßen Kabelverbindungseinrichtung mit einem Überbrückungselement und zwei Leitungen;
- Fig. 2: die Gehäusehälfte aus Fig. 1 aus einer im Vergleich zu Fig. 1 gegenüberliegenden Position;
- Fig. 3: die erfindungsgemäße Kabelverbindungseinrichtung aus Fig. 1, wobei eine zweite Gehäusehälfte mit der ersten Gehäusehälfte verrastet ist;
- Fig. 4: eine perspektivische Ansicht eines Querschnitts durch die Kabelverbindungseinrichtung gemäß Fig. 3 entlang der Linie IV-IV;
- Fig. 5: eine perspektivische Ansicht eines Querschnitts durch die Kabelverbindungseinrichtung gemäß Fig. 3 entlang der Linie V-V; und
- Fig. 6: eine perspektivische Ansicht einer erfindungsgemäßen Überbrückungselements.

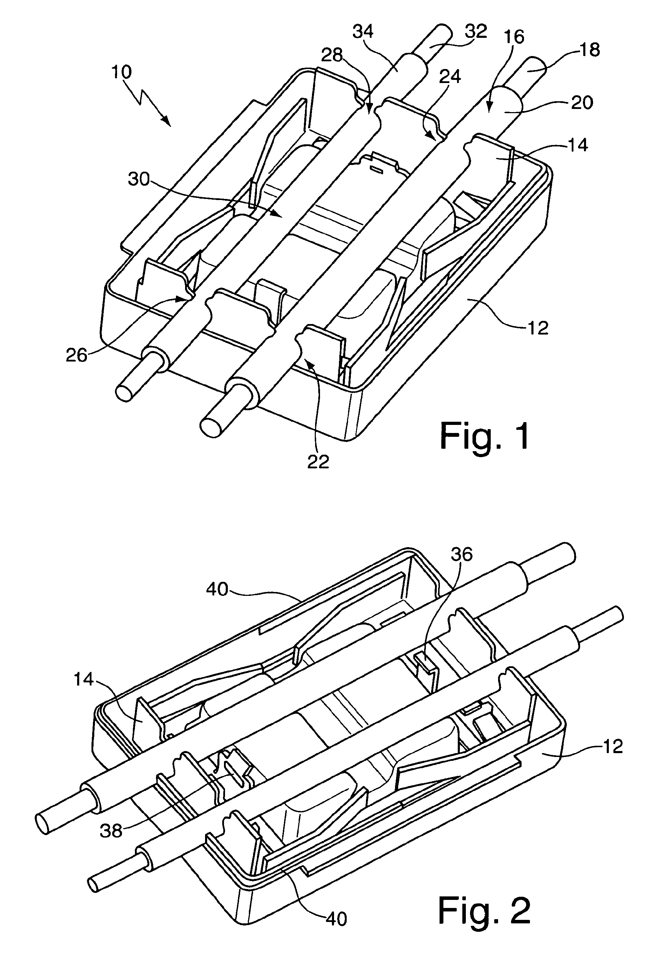

In der **Fig. 1** ist ein Teil einer erfindungsgemäßen Kabelverbindungseinrichtung 10 dargestellt. Sie weist eine Gehäusehälfte 12 und ein elektrisch leitendes Überbrückungselement 14 auf, wobei durch das Gehäuse 12 eine erste elektrische Leitung 16, die einen innenliegenden stromführenden Kern 18 und eine isolierende Umhüllung 20 aufweist, über das Überbrückungselement 14 durch die Kabelverbindungseinrichtung 10 hindurchgeführt ist. Dazu ist die erste Leitung 16 in eine erste vordere Ausnehmung 22 und eine erste hintere Ausnehmung 24 des Überbrückungselements 14 eingelegt. Das Gehäuse 12 ist aus Kunststoff oder einem Faserverbundwerkstoff hergestellt und das Überbrückungselement 14 aus einem elektrischen Leiter, wie Metall.

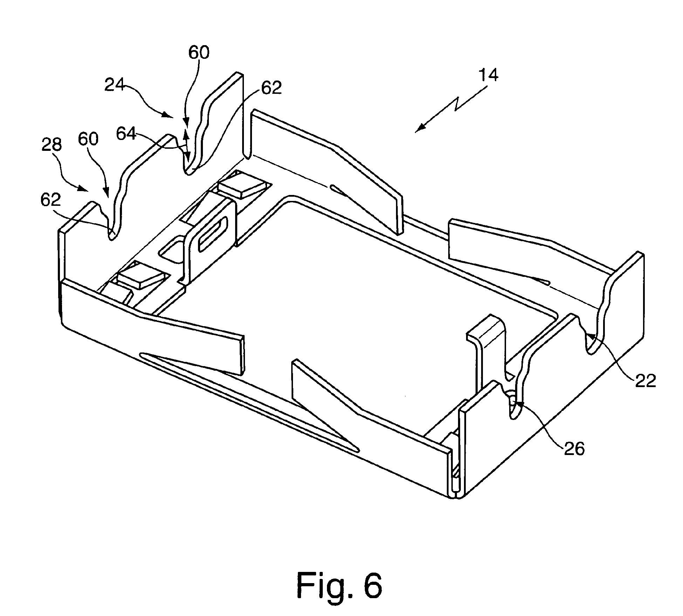

Die Größe der ersten vorderen und ersten hinteren Ausnehmung 22,24 ist geringfügig kleiner als der Durchmesser des stromführenden Kerns 18 der ersten Leitung 16, sodass der Kern 18 eng in der ersten vorderen und ersten hinteren Ausnehmung 22,24, insbesondere in einem jeweiligen Ausnehmungsgrund (vgl. hierzu Fig. 6) sitzt.

Das Überbrückungselement 14 weist ferner eine zweite vordere Ausnehmung 26 und eine zweite hintere Ausnehmung 28 für eine zweite elektrische Leitung 30 auf, wobei die zweite Leitung 30 ebenfalls einen innenliegenden stromführenden Kern 32 und eine isolierende Umhüllung 34 umfasst. Auch die Größe der zweiten vorderen und hinteren Ausnehmung 26,28 insbesondere die Größe des Ausnehmungsgrundes der zweiten vorderen und hinteren Ausnehmungen 26,28 ist geringfügig kleiner als der Querschnitt des stromführenden Kerns 32 der zweiten elektrischen Leitung 30.

Durch das Einlegen bzw. Einpressen der ersten Leitung 16 und der zweiten Leitung 30 in ihre entsprechenden Ausnehmungen 22,24,26,28, werden die isolierenden Umhüllungen 20,34 der Leitungen 16,30 aufgeschnitten und das Überbrückungselement 14 berührt bzw. kontaktiert die Leitungen 16,30 im Bereich der Ausnehmungen 22,24,26,28, sodass sich ein sehr guter elektrisch leitender Übergang von dem Überbrückungselement 14 zu den Leitungen 16,30 und umgekehrt ergibt.

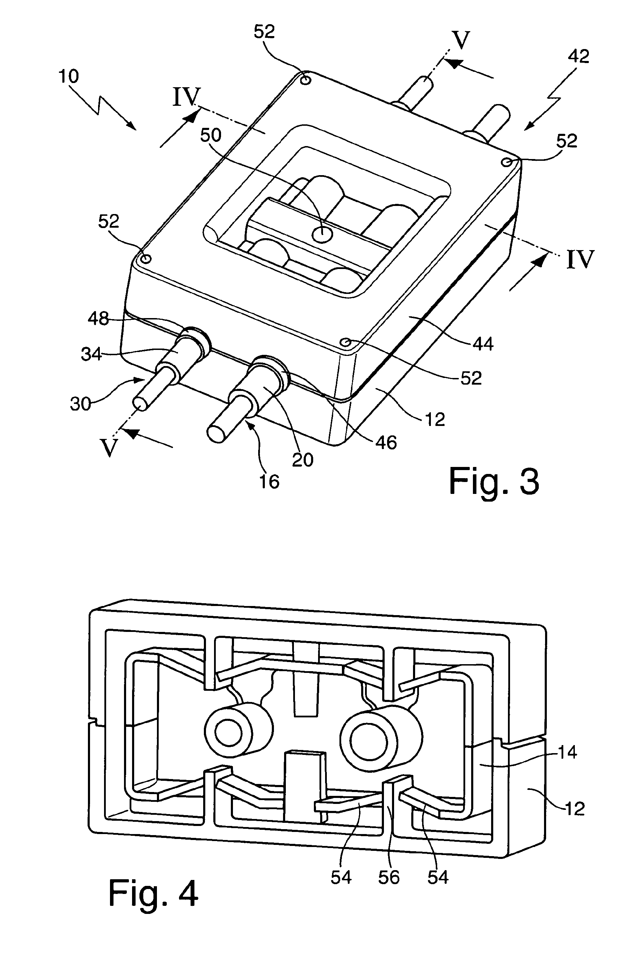

In der **Fig. 2** ist die Gehäusehälfte 12 aus Fig. 1 aus einer anderen Perspektive dargestellt. Auf die Gehäusehälfte 12 ist eine weitere (in Fig. 3 dargestellte) Gehäusehälfte über ein Rastelement 36 des Überbrückungselements 14 und über eine Verrastungsaufnahme 38 des Überbrückungselements 14 aufsteckbar, insbesondere irreversibel verrastbar. Die Gehäusehälfte 12 weist zum gegenseitigen Verrasten ferner einen Rand bzw. eine Bördelung 40 auf.

Die **Fig. 3** zeigt das Gehäuse 42 der Kabelverbindungseinrichtung 10, welches die erste Gehäusehälfte 12 und eine zweite Gehäusehälfte 44 umfasst. Die Gehäusehälften 12,44 sind dabei gleich bzw. symmetrisch ausgebildet. An jeder Gehäusehälfte 12,44 sind zur Aufnahme der ersten dickeren Leitung 16 und der zweiten dünneren Leitung 30 Randschalen 46,48 angeformt, die einen dichtenden Abschluss zwischen den Gehäusehälften 12,44 und den isolierenden Umhüllungen 20,34 der Leitungen 16,30 bewirkt. Der Rand 40 und die Randschalen 46,48 sind so ausgebildet, dass das Gehäuse 42 bei ineinander verrasteten Gehäusehälften 12,44 staub- und/oder feuchtigkeitsdicht verschlossen ist.

Des Weiteren weist das Gehäuse 42 an seiner zweiten Gehäusehälfte 44 zum Einbringen eines Füllmaterials in das Gehäuseinnere eine zentrale Eintrittsöffnung 50 und in einem Außenbereich des Gehäuses 44 vier kleinere Austrittsöffnungen 52 auf. Damit kann die Kabelverbindungseinrichtung 10 mit beispielsweise einem Heißkleber oder dergleichen ausgefüllt werden.

In der **Fig. 4** ist eine perspektivische Ansicht eines Querschnitts durch die Kabelverbindungseinrichtung gemäß Fig. 3 entlang der Linie IV-IV dargestellt. Dadurch werden Klemmmechanismen zum Verklemmen des Überbrückungselementes 14 mit der Gehäusehälfte 12 ersichtlich. Zum Verklemmen weist das Überbrückungselement 14 schrägstehende Widerhaken 54 auf, in die Stege 56 der Gehäusehälfte 12 hineingesteckt werden können.

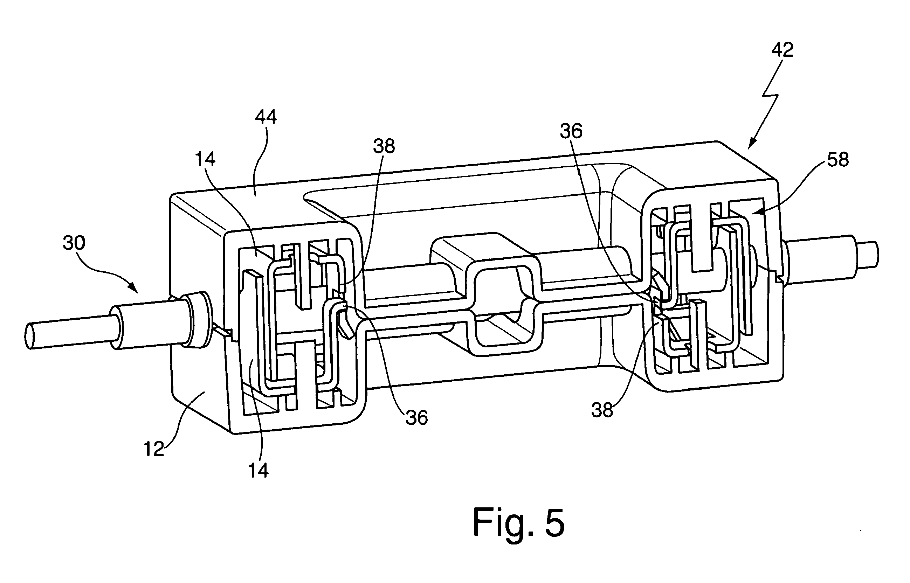

In der **Fig. 5** ist eine perspektivische Ansicht eines Querschnitts durch die Kabelverbindungseinrichtung gemäß Fig. 3 entlang der Linie V-V gezeigt. Somit wird die Führung der zweiten Leitung 30 durch das Gehäuse 42 hindurch ersichtlich. Darüber hinaus ist erkennbar, dass für jede Gehäusehälfte 12,44 ein eigenes Überbrückungselement 14 vorgesehen ist, und dass die Überbrückungselemente 14 über das Rastelement 36 und über die Verrastungsaufnahme 36 miteinander irreversibel verbunden sind. Im dargestellten, miteinander verrasteten Zustand der Gehäusehälften 12,44 ist die zweite Leitung 30 durch die Überbrückungselemente 14 rundum verpresst. Das Gehäuseinnere 58 (noch verbleibende Hohlräume) wird typischerweise durch einen Heißkleber (Hotmelt) oder dergleichen ausgefüllt.

Die **Fig. 6** zeigt das rahmenförmige Überbrückungselement 14 ohne Gehäusehälfte. Dadurch ist sind die ersten vorderen und hinteren Ausnehmungen 22,24 sowie die zweiten vorderen und hinteren Ausnehmungen 26,28 besser erkennbar. Die Ausnehmungen 22,24,26,28 weisen jeweils von ihren Ausnehmungsöffnungen 60 zu einem jeweiligen Ausnehmungsgrund 62 hin so genannte Einführ- bzw. Aufschneidschlitze 64 auf. Diese werden zum Ausnehmungsgrund 62 hin, der im Wesentlichen halbkreisförmig ausgebildet ist, kontinuierlich enger, um beim Einlegen der Leitungen deren isolierende Umhüllungen aufzuschneiden, und um einen guten elektrisch leitenden Kontakt sicherzustellen. Die Randbereiche der Einführ- und Aufschneidschlitze 64 sind scharfkantig ausgebildet.

Zusammenfassend betrifft die Erfindung eine Kabelverbindungseinrichtung 10 mit einem Gehäuse 42 und einem elektrisch leitenden Überbrückungselement 14, wobei durch das Gehäuse 42 eine erste elektrische Leitung 16, die einen innenliegenden stromführenden Kern 18 und eine isolierende Umhüllung 20 aufweist, über das Überbrückungselement 14 durch die Kabelverbindungseinrichtung 10 hindurchführbar ist, indem die Leitung 16 in mindestens eine erste Ausnehmung 22,24 des Überbrückungselements 14 einlegbar ist, wobei die Größe der ersten Ausnehmung 22,24 dem Durchmesser des stromführenden Kerns 18 der elektrischen Leitung 16 entspricht oder geringfügig kleiner ist und dass das Überbrückungselement 14 mindestens eine zweite Ausnehmung 26,28 für mindestens eine zweite elektrische Leitung 30, die einen innenliegenden stromführenden Kern 32 und eine isolierende Umhüllung 34 umfasst, aufweist, wobei die Größe der zweiten Ausnehmung 26,28 dem Querschnitt des stromführenden Kerns 32 der zweiten elektrischen Leitung 30 angepasst ist oder geringfügig kleiner ist. Durch die erfindungsgemäße Kabelverbindungseinrichtung 10 können elektrische Verbindungen zwischen mindestens zwei Leitungen 16,30 in einfacher Art und Weise, schnell und mit hoher Qualität hergestellt werden. Die elektrische Verbindung ist insbesondere beim Ausfüllen des Gehäusinneren 58 mit einem isolierenden Füllmaterial elektrisch isoliert und gegenüber Witterungseinflüssen, wie Feuchtigkeit, von außen geschützt.

## Patentansprüche

1. Kabelverbindungseinrichtung (10) mit einem Gehäuse (12, 44) und einem elektrisch leitenden Überbrückungselement (14), wobei durch das Gehäuse (12, 44) eine erste elektrische Leitung (16), die einen innenliegenden stromführenden Kern (18) und eine isolierende Umhüllung (20) aufweist, über das Überbrückungselement (14) durch die Kabelverbindungseinrichtung (10) hindurchführbar ist, indem die Leitung (16) in mindestens eine erste Ausnehmung (22, 24) des Überbrückungselements (14) einlegbar ist, wobei die Größe der ersten Ausnehmung (22, 24) dem Durchmesser des stromführenden Kerns (18) der elektrischen Leitung (16) entspricht oder geringfügig kleiner ist und dass das Überbrückungselement (14) mindestens eine zweite Ausnehmung (26, 28) für mindestens eine zweite elektrische Leitung (30), die einen innenliegenden stromführenden Kern (32) und eine isolierende Umhüllung (34) umfasst, aufweist, wobei die Größe der zweiten Ausnehmung (26, 28) dem Querschnitt des stromführenden Kerns (32) der zweiten elektrischen Leitung (30) angepasst ist oder geringfügig kleiner ist.

2. Kabelverbindungseinrichtung (10) nach Anspruch 1, **dadurch gekennzeichnet, dass** die Ausnehmungen (22, 24, 26, 28) zur Aufnahme des stromführenden Kerns (18, 32) der Leitungen (16, 30) einen im Wesentlichen halbkreisförmigen Grund (62) aufweisen.

3. Kabelverbindungseinrichtung (10) nach Anspruch 2, **dadurch gekennzeichnet, dass** die Ausnehmungen (22, 24, 26, 28) von Ausnehmungsöffnungen (60) zum Grund (62) der Ausnehmungen (22, 24, 26, 28) hin einen kontinuierlich enger werdenden Einführ- bzw. Aufschneidschlitz (64) aufweisen.

4. Kabelverbindungseinrichtung (10) nach einem der vorhergehenden Ansprüche, **dadurch gekennzeichnet, dass** das Überbrückungselement (14) zum Aufschneiden der isolierenden Umhüllung (20,34) im Randbereich der Ausnehmungen (22, 24, 26, 28) scharfkantig ausgebildet ist.

5. Kabelverbindungseinrichtung (10) nach einem der vorhergehenden Ansprüche, **dadurch gekennzeichnet, dass** das Überbrückungselement (14) für jede elektrische Leitung (16,30) eine vordere und eine hintere Ausnehmung (22, 24 ,26, 28) aufweist.

6. Kabelverbindungseinrichtung (10) nach Anspruch 5, **dadurch gekennzeichnet, dass** das Überbrückungselement (14) rahmenförmig ausgebildet ist, wobei an einer vorderen Rahmenseite des Überbrückungselements (14) vordere Ausnehmungen (22, 26) und an einer hinteren Rahmenseite des Überbrückungselements (14) hintere Ausnehmungen (24, 28) vorgesehen sind.

7. Kabelverbindungseinrichtung (10) nach einem der vorhergehenden Ansprüche, **dadurch gekennzeichnet, dass** das Gehäuse (42) zwei Gehäusehälften (12, 44) aufweist, die miteinander verrastbar sind.

8. Kabelverbindungseinrichtung (10) nach Anspruch 7, **dadurch gekennzeichnet, dass** die Gehäusehälften (12, 44) irreversibel miteinander verrastbar sind.

9. Kabelverbindungseinrichtung (10) nach einem der Ansprüche 7 oder 8, **dadurch gekennzeichnet, dass** für jede Gehäusehälfte (12, 44) ein Überbrückungselement (14) vorgesehen ist, wobei im miteinander verrasteten Zustand der Gehäusehälften (12, 44) die Leitungen (16, 30) durch die Überbrückungselemente (14) rundum verpressbar sind.

10. Kabelverbindungseinrichtung (10) nach Anspruch 9, **dadurch gekennzeichnet, dass** die Überbrückungselemente (14) mindestens ein Rastelement (36) und mindestens eine Verrastungsaufnahme (38) aufweisen.

11. Kabelverbindungseinrichtung (10) nach einem der Ansprüche 7 bis 10, **dadurch gekennzeichnet, dass** die Gehäusehälften (12, 44) und die Überbrückungselemente (14) symmetrisch ausgebildet sind.

12. Kabelverbindungseinrichtung (10) nach einem der vorhergehenden Ansprüche, **dadurch gekennzeichnet, dass** an dem Gehäuse (42) zum Einbringen eines Füllmaterials in das Gehäuseinnere (58) mindestens eine Eintrittsöffnung (50) und mindestens eine Austrittsöffnung (52) ausgebildet ist.

13. Kabelverbindungseinrichtung (10) nach einem der vorhergehenden Ansprüche, **dadurch gekennzeichnet, dass** die Eintrittsöffnung (50) zentral an dem Gehäuse (42) angeordnet ist und dass die Austrittsöffnung (52) in einem Außenbereich des Gehäuses (42) angeordnet ist.

14. Kabelverbindungseinrichtung (10) nach einem der vorhergehenden Ansprüche, **dadurch gekennzeichnet, dass** in das verrastete Gehäuse (42) als Füllmaterial ein Heißklebematerial unter Druck einspritzbar ist.

15. Verwendung einer Kabelverbindungseinrichtung (10) nach einem der vorhergehenden Ansprüche beim Aufbau einer Photovoltaikanlage.
